# FASCICULE DE BREVET EUROPEEN

(11) **EP 3 563 556 B1**
(45) Date de publication et mention de la délivrance du brevet: **19.07.2023**
(21) Numéro de dépôt: 17832526.2
(22) Date de dépôt: 21.12.2017
(51) Int. Cl.: H04L 67/125, H04L 9/40, H04L 12/28, H04L 67/51

(54) **PROCÉDÉS DE CONFIGURATION D'ACCÈS, DE COMMANDE ET DE SUPERVISION À DISTANCE D'AU MOINS UN DISPOSITIF DOMOTIQUE APPARTENANT À UNE INSTALLATION DOMOTIQUE**
VERFAHREN ZUR FERNKONFIGURATION DES ZUGANGS ZU SOWIE DER STEUERUNG UND ÜBERWACHUNG VON MINDESTENS EINER HEIMAUTOMATIONSVORRICHTUNG ALS TEIL EINER HEIMAUTOMATISIERUNGSANLAGE
METHODS FOR REMOTELY CONFIGURING ACCESS TO, CONTROLLING AND MONITORING AT LEAST ONE HOME AUTOMATION DEVICE FORMING PART OF A HOME AUTOMATION INSTALLATION

(30) Priorité: 28.12.2016 FR 1663451
(43) Date de publication de la demande: 06.11.2019
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2017/053774
(87) Numéro de publication internationale: WO 2018/122508

(56) Documents cités:
- EP-A1- 1 260 906
- WO-A1-2016/038374
- US-A- 5 944 794
- US-A1- 2014 159 879
- US-A1- 2016 277 413

## Description

### Domaine de l'invention

La présente invention concerne un procédé de configuration d'accès, un procédé de commande et un procédé de supervision d'au moins un dispositif domotique d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques. Le document US 2014/159879 A1 décrit un système pour la surveillance et la commande à distance d'appareils ménagers comprenant des ensembles d'appareils d'utilisateur et de dispositifs de surveillance associés et un site distant fournissant le service de commande et de surveillance à distance. Selon le système décrit, les utilisateurs créent un compte utilisateur sur le site distant, des appareils et des dispositifs de surveillance sont enregistrés sur le site distant, par exemple lors de la détection d'un nouvel appareil, par le dispositif de surveillance local, moyennant quoi les appareils et les dispositifs de surveillance sont associés au compte utilisateur.

Les utilisateurs peuvent souhaiter utiliser des services tiers pour exploiter les données générées par les dispositifs domotiques de l'installation ou permettre un contrôle par des services tiers.

Toutefois, l'hétérogénéité des dispositifs domotiques et la gestion de l'accès à chaque dispositif visant à assurer la sécurité de l'installation domotique, rendent difficile une telle ouverture du système.

La présente invention a pour but de résoudre tout ou partie des inconvénients mentionnés ci-dessus.

### Exposé de l'invention

A cet effet, la présente invention concerne des procédés tels que revendiqués dans les revendications indépendantes 1, 6, 7 et 10. Des modes de réalisation préférés sont couverts par les revendications dépendantes.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur ;
La figure 3 est un schéma représentant un serveur ou un groupe de serveur destiné à l'exécution d'un premier service d'accès à distance et un deuxième serveur ou groupe de serveur destiné à l'exécution d'un deuxième service d'accès à distance.
La figure 4 est un schéma illustrant un mode de mise en oeuvre d'un procédé de configuration d'accès à distance à au moins un dispositif domotique d'une installation domotique.
La figure 5 est un schéma illustrant un mode de mise en oeuvre d'un procédé de configuration d'accès à distance à au moins un dispositif domotique d'une installation domotique.
La figure 6 est un schéma illustrant un mode de mise en oeuvre d'un procédé de supervision à distance d'au moins un dispositif domotique d'une installation domotique.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

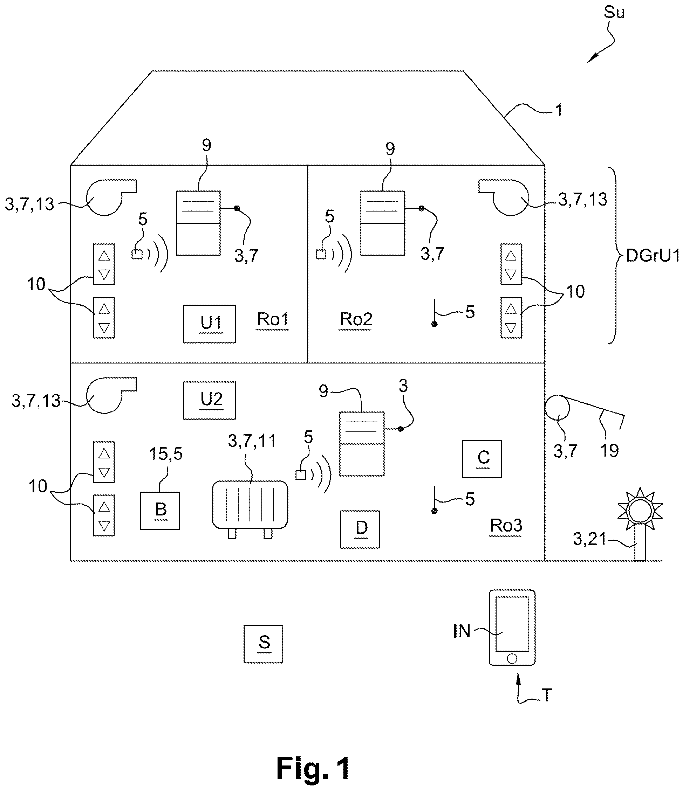

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

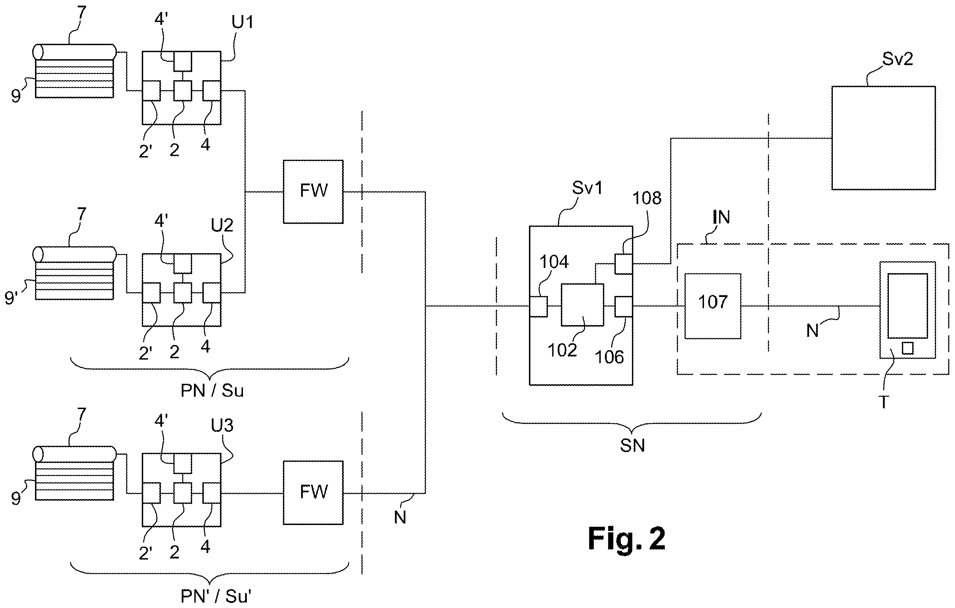

Comme cela est représenté sur la figure 2, chaque unité centrale de commande U est agencée pour communiquer avec un serveur Sv1.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le serveur Sv1 est également disposé sur un réseau privé SN. Le réseau privé PN est relié à un réseau étendu N, par exemple Internet. Bien entendu, le serveur Sv1 est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en oeuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Dans le cas ou l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemples incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv1. Le serveur Sv1 permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv1 à travers un serveur intermédiaire, par exemple d'un fournisseur de service tiers, dont le serveur intermédiaire offre une interface de service ou API. Le serveur Sv1 comprend, de son côté, au moins une interface de communication 104 destinée à la communication avec l'unité centrale U.

Le serveur Sv1 peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service utilisateur Sv1c1.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T1 communiquant par le réseau étendu N. Le terminal de communication mobile T1 peut être, par exemple, un téléphone intelligent ou une tablette. Le terminal de communication mobile T1 peut être le même ou un terminal du même type que celui avec lequel l'unité centrale de commande U communique en local au moyen du module de communication 4', ou un terminal différent. Nous désignerons indifféremment ces terminaux mobiles par la référence T1. Alternativement, l'utilisateur final pourrait également faire usage d'un terminal fixe.

L'interface de commande et/ou de contrôle IN1 comprend un processeur qui peut être disposé au niveau du serveur web 107 et/ou du terminal de communication mobile T1.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Le Serveur Sv1 peut également comprendre une interface de communication 108 destinée à la communication avec un autre serveur Sv2 sous la responsabilité d'une autre entité que celle qui opère le serveur Sv1 et qui propose au moins un deuxième services comme cela sera décrit ultérieurement. Cette interface permet la communication entre les deux serveurs Sv1 et Sv2 sur un réseau local ou étendu, par exemple Internet.

### Identifiant unique d'un dispositif domotique

Le serveur Sv1 et les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

### 1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique GDURL correspond à un sous-système portant le n°2 associé à un dispositif D communiquant par le protocole IO homecontrol avec une adresse radio 145036 accessible par l'unité centrale de commande U portant l'identifiant #0201-0001-1234.

### Premier service et deuxième service tiers

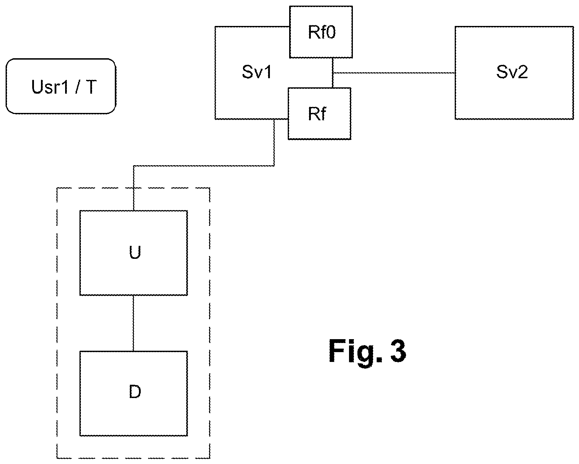

Le Serveur Sv1 ou un groupe de Serveur Sv1 héberge un ou plusieurs serveurs logiciels destinés à fournir des services, comme cela est illustré sur la figure 3.

En particulier, un premier service Svc1 correspond à un service utilisateur destiné au contrôle à distance de l'installation domotique Su par un utilisateur Usr1 final. Le service utilisateur Svc1 est un service informatisé accessible à distance, qui permet l'accès à au moins une fonction de commande ou de supervision d'une installation domotique ou d'un dispositif domotique, au moyen d'une interface utilisateur. L'interface utilisateur peut être accessible par une interface graphique, ou par l'intermédiaire d'une interface de programmation.

Un deuxième service Svc2 correspond à un service tiers, qui est à même de générer au moins une instruction à distance pour la réalisation d'au moins une commande pour au moins un dispositif domotique D d'une installation Su, ou de traiter des données en provenance d'au moins un dispositif domotique D.

Le premier service Svc1 peut être sous le contrôle d'une première entité et le deuxième service Svc2 peut être sous le contrôle d'une deuxième entité. Le deuxième service peut être considéré comme un service partenaire auquel un accès peut être accordé.

A titre d'exemple, la première entité peut être un fournisseur d'infrastructure ou de gestion d'installation domotiques, et la deuxième entité peut être un fournisseur de services en lien avec les données ou la commande de dispositifs domotique. En particulier, il est possible de considérer une installation comprenant un dispositif D de type capteur de consommation, par exemple un capteur de consommation électrique. Le deuxième service Svc2 peut proposer une fonctionnalité de suivi de consommation qui nécessite l'accès à des données de consommation générées par le capteur de consommation. A titre d'exemple, le deuxième service peut être un service utilisateur d'un fournisseur d'énergie.

### Référentiel de droit d'accès et jeton d'identification

Le premier service Svc1 met en oeuvre un référentiel de droit d'accès Rf. Le référentiel de droit d'accès Rf établit la correspondance entre un deuxième service Svc2 appelant et les actions autorisées sur des ressources Rc du premier service Svc1. Une ressource Rc est un identifiant d'un élément logique d'une installation domotique Su sous le contrôle du premier service Svc1, éventuellement agencé pour présenter différents niveaux de granularité en fonction des possibilités du service Svc1. Ainsi une ressource Rc pourra être constituée d'une installation St entière ou bien d'un dispositif domotique D ou d'un ensemble de dispositifs D, ou même d'une ou plusieurs commandes C ou fonctions ou variables d'états S d'un dispositif domotique D. Selon un mode de réalisation particulier, les ressources pourront être organisées de manière hiérarchique à l'aide d'un identifiant de ressource de type chemin d'accès correspondant par exemple à l'identifiant de dispositif DURL décrit précédemment, en ajoutant éventuellement un identifiant complémentaire de ressource Rc, ou en définissant des niveaux intermédiaires correspondant à un accès à plusieurs éléments de l'arborescence définie. Le tableau 1 ci-dessous donne un exemple d'une première structure de donnée du référentiel Rf.

| Deuxième Service Svc2 | Ressources Rc | Actions autorisées |
|---|---|---|
| Svc2 | setup/1234/sensors/temperature/* | READ |
| Svc2 | setup/1234/actuators/rollershutters/^{∗}/command/open | EXECUTE |

### Tableau 1: Exemple de première structure de données du référentiel Rf

Dans cet exemple de référentiel, le service Svc2 est autorisé à lire les variables d'état des capteurs de température de l'installation n°1234 et à utiliser la commande « open » sur tous les actionneurs de type volet roulant.

Ainsi lorsque le deuxième service Svc2 va effectuer une demande de lecture ou de commande auprès de Svc1 sur une ressource Rc donnée, celui ci va pouvoir vérifier dans son référentiel de droits d'accès Rf si la requête peut être autorisée. De même, dans le cas où des informations relatives à des ressources Rc sous le contrôle du premier service Svc1 sont mises à jour, telles que des changements de valeur des variables d'état S des dispositifs domotiques D, celles-ci pourront être retransmises automatiquement au service Svc2 si la ressource associée Rc est autorisée en lecture dans le référentiel Rf.

Afin d'identifier de manière sécurisée les requêtes provenant du service Svc2, le service Svc1 peut utiliser un jeton d'identification Tk du service Svc2.

Ce jeton d'identification Tk peut être à validité permanente ou limitée, auquel cas il devra être renégocié régulièrement auprès du premier service Svc1. Ce jeton sera stocké dans le référentiel Rf du service Svc1 pour effectuer la correspondance avec les autorisations sur les ressources.

Ainsi un service Svc2, accepté par un utilisateur Usr1 associé à une installation domotique Su gérée par le service Svc1 et contenant un dispositif D1, devra fournir le jeton d'identification Tk associé à cette installation dans sa requête au service Svc1. Le tableau 2 ci-dessous donne un exemple d'une deuxième structure de donnée du référentiel Rf.

**Tableau 2: Exemple de deuxième structure de donnée du référentiel Rf**

| Deuxième Service Svc2 | Jeton |
|---|---|
| Svc2a | Tka |
| Svc2b | Tkb |

Le jeton d'identification pour un deuxième service peut être invalidé par le premier service s'il n'existe plus d'accord entre la première entité contrôlant le premier service et la deuxième entité contrôlant le deuxième service ou encore si l'utilisateur supprime son autorisation au deuxième service Il est également possible que le jeton soit invalidé après une période prédéterminée si le jeton n'est pas renouvelé.

A titre d'exemple, le référentiel peut être constitué par une base de données ou un service de répertoire. Ce référentiel peut être compris dans le premier service Svc1 ou externe et accessible par le premier service Svc1. Selon un mode de réalisation alternatif ou complémentaire, le référentiel de droits d'accès peut utiliser des algorithmes de calcul prenant en entrée les informations du dispositif, de la variable d'état et du deuxième service (type, identifiant et valeur) et fournissant en retour un résultat booléen indiquant si l'accès est autorisé.

### Référentiel de définition de règles d'accès

Afin de définir les droits d'accès contenus dans le référentiel de droit d'accès Rf, le premier service peut utiliser un référentiel Rf0 de définition de règles d'accès, qui peut être compris dans le référentiel de droit d'accès ou distinct, mais accessible par le premier service Svc1.

Le référentiel Rf0 de définition de règles d'accès comprend des associations entre un type de dispositif domotique DT, au moins un deuxième service Svc2 et optionnellement des règles d'accès ou de filtrages. Ainsi, le premier service Svc1 peut déterminer un deuxième service associé au dispositif domotique D1 pour lequel un accès à distance doit être configuré avec des règles d'accès ou de filtrage correspondantes. Le type d'autorisation donné à un deuxième service Svc2 peut être défini en fonction de règles établies entre la première entité contrôlant le premier service Svc1 et la seconde entité contrôlant le deuxième service Svc2. Un exemple de table de définition de règles d'accès contenu dans le référentiel de règles d'accès Rf0 est représenté ci-dessous dans le tableau 3.

**Tableau 3: Exemple de table de définition de règles d'accès**

| Type de dispositif DT | Deuxième service | Actions autorisées |
|---|---|---|
| DT1 | Svc2_1 | READ / Température |
| DT2 | Svc2- | EXECUTE / Shutter Up/down |

### Procédé de configuration

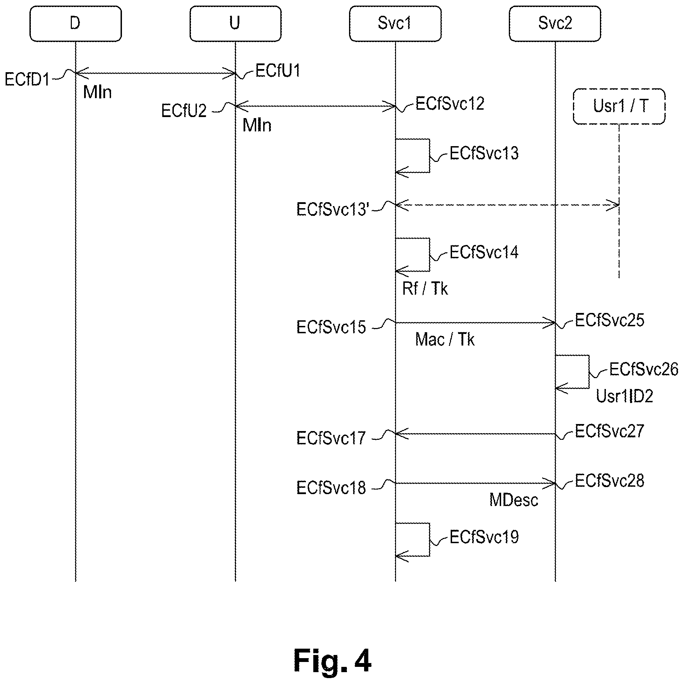

Nous allons à présent décrire un procédé de configuration d'un accès à distance à au moins un dispositif domotique D appartenant à une installation domotique Su en référence à la figure 4.

Nous supposons que l'utilisateur Usr1 possède un compte utilisateur pour le service Svc1 avec un identifiant Usr1ID1 correspondant.

L'utilisateur Usr1 ou un installateur procède à l'installation d'un dispositif D1 dans son installation domotique Su et à l'appairage de ce dispositif domotique D1 avec une unité centrale de commande U présente dans l'installation ce qui correspond à un échange d'information constituant respectivement les étapes ECfD1 et ECfU1. Alternativement, l'échange d'information peut correspondre à l'installation d'une unité centrale de commande U et à la découverte par cette unité centrale de commande U d'un dispositif domotique D précédemment installé. Cet évènement correspond à l'établissement d'une liaison par l'intermédiaire du réseau R1 entre l'unité centrale de commande U et le dispositif domotique D.

L'unité centrale de commande U procède ensuite dans une étape ECfU2 à l'envoi d'un message d'information concernant la présence ou la découverte du dispositif domotique D1 à destination d'une unité de gestion Sv qui reçoit ce message dans une étape ECfSvc12.

Dans une étape ECfSvc13, le premier service Svc1 consulte le référentiel Rf0 de définition de règles d'accès afin de déterminer s'il existe un deuxième service associé au type du dispositif domotique D1 pour lequel un accès à distance doit être configuré avec des règles de filtrage ou d'action correspondantes. Nous supposerons ici qu'un tel service est défini.

Optionnellement, le premier service peut demander dans une étape ECfSvc13' une autorisation à l'utilisateur final Usr1, par l'intermédiaire d'un terminal utilisateur T préalablement à la configuration de l'accès à distance, et conditionner la configuration de l'accès à une réponse positive de l'utilisateur.

L'accès pour le deuxième service partenaire peut être globale pour une installation donnée rattachée au compte utilisateur de l'utilisateur Usr1, ou ne concerner qu'un groupe de dispositif ou un dispositif domotique D particulier. De la même façon, l'accès peut concerner l'ensemble des variables d'état ou des commandes d'un dispositif, ou concerner un sous-ensemble des variables d'état ou des commandes d'un dispositif concerné en fonction d'un filtrage. A titre d'exemple, dans le cas d'un deuxième service Svc2 visant à proposer une optimisation énergétique, seule la lecture des valeurs des variables d'état S relatives aux dispositifs domotiques D correspondant à des capteurs de température ou des capteurs de consommation et/ou la commande C d'un mode de chauffage (eco, confort) de l'installation peut être autorisé pour le service Svc2. La consultation des variables d'état ou le déclenchement de commande concernant les autres dispositifs domotiques de l'installation comme les lampes, volets ou les portes d'accès à l'habitation ou au garage, par exemple, ne seront pas autorisés pour le service Svc2 pour des raisons de sécurité.

Le premier service Svc1 procède ensuite, dans une étape ECfSvc14 de configuration en vue de permettre l'acceptation d'ordre de commande en provenance du deuxième service Svc2 ou en vue de l'envoi de données de supervision vers le deuxième service Svc2. En particulier, le premier service Svc1 configure un référentiel de droits d'accès Rf. La structure de ce référentiel a été décrite précédemment. Le premier service Svc1 configure donc le référentiel Rf de façon conforme à la demande d'accès reçue et acceptée par l'utilisateur pour des ressources Rc données afin d'obtenir par exemple une structure telle que décrite dans le tableau 1.

Lors de l'étape de configuration, un jeton d'identification Tk peut également être généré pour le deuxième service Svc2 et stocké dans le référentiel Rf. Le jeton peut être communiqué au service Svc2 lors d'une étape ultérieure.

Dans une étape ECfSvc15, le premier service Svc1 émet un message d'acceptation/d'inscription vers le deuxième service Svc2 qui est reçu par le deuxième service dans une étape ECfsvc25. Le jeton d'identification Tk peut être communiqué par exemple lors de cette étape ou lors d'une étape distincte. Le message peut contenir des informations sur l'utilisateur Usr1 ou son identifiant Usr1ID1 de l'utilisateur Usr1 sur le premier service. Dans le cas où le premier service a demandé une autorisation à l'utilisateur final Usr1 par l'intermédiaire d'un terminal utilisateur T, la transmission du message d'acceptation/d'inscription peut aussi s'effectuer par l'intermédiaire dudit terminal T qui va recevoir le message en réponse à son acceptation auprès de Svc1 et renvoyer ce message au deuxième service Svc2

Dans une étape ECfsvc26, le deuxième service Svc2 procède à la configuration ou à la création d'un profil ou compte pour l'utilisateur Usr1, avec un identifiant correspondant Usr1ID2, et peut enregistrer la correspondance entre l'identifiant Usr1ID1 de l'utilisateur Usr1 sur le premier service, et l'identifiant Usr1ID2 de l'utilisateur Usr1 sur le deuxième service. Le deuxième service peut également stocker le jeton d'identification Tk.

Dans une étape ECfSvc27, le deuxième service Svc2 communique ensuite une confirmation de la création du compte utilisateur et optionnellement l'identifiant créé Usr1ID2.

Dans une étape ECfSvc18, le premier service Svc1 peut transmettre une description MDesc, ou une vue filtrée de l'installation ou d'un groupe de dispositifs domotiques D comprenant au moins un dispositif, au deuxième service Svc2, qui le reçoit dans une étape ECfsvc28.

Selon une étape additionnelle ECfSvc19, le deuxième service Svc2 peut être inscrit comme souscripteur à des évènements concernant l'au moins un dispositif D concerné par l'accès à distance.

### Procédé de commande

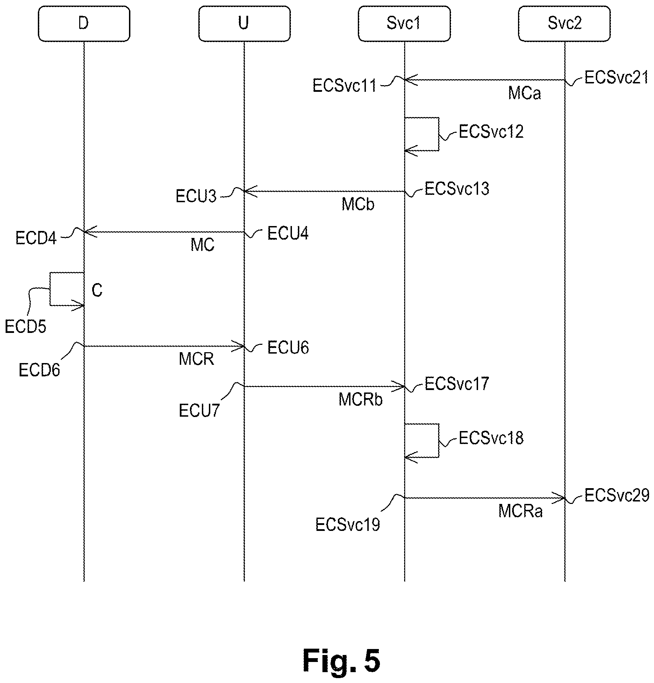

Nous allons à présent décrire un procédé de commande à distance d'au moins un dispositif domotique D appartenant à une installation domotique D en référence à la figure 5. Nous supposons ici que les étapes d'un procédé de configuration ont été réalisées conformément par exemple à ce qui a été exposé précédemment en référence à la figure 4.

Dans une étape ECSvc21, le deuxième service Svc2 émet un message de commande MCa à destination du premier service Svc1 qui le reçoit dans une étape ECSvc11. Ce message concerne un dispositif domotique D, et une commande C à réaliser sur ce dispositif. Le message MCa contient également des éléments d'identification permettant de valider que la demande provient bien d'un deuxième service Svc2 autorisé, tel que le jeton d'identification Tk obtenu lors du procédé de configuration.

Dans une étape ECSvc12, Le service Svc1 opère un contrôle afin de vérifier l'identification du deuxième service Svc2 sur la base par exemple du jeton d'identification. Le service Svc1 vérifie ensuite si une commande demandée dans le message MCa par le service Svc2 est autorisée, c'est-à-dire si elle concerne un dispositif D pour lequel une autorisation a été donnée lors de la configuration, et/ou si la commande ou la fonction concernée est autorisée pour ce dispositif pour le deuxième service Svc2. En particulier, cette vérification est effectuée auprès du référentiel Rf.

Dans une étape ECSvc13, dans le cas ou la commande C est autorisée pour le service Svc2, le premier service Svc1 émet un message de commande MCb à destination d'une unité centrale de commande U à laquelle est rattachée le dispositif domotique D concerné par la commande C qui le reçoit dans une étape ECU3. Le format de ce message peut être distinct de celui du message MCa, une conversion de format pouvant être réalisée par le premier service.

Dans une étape ECU4, l'unité centrale de commande U émet un message de commande MC à destination du dispositif domotique D concerné par la commande C qui le reçoit dans une étape ECD4. Le format de ce message peut être distinct de celui du message MCb, une conversion de format pouvant être réalisée par l'unité centrale de commande U.

Dans une étape ECD5, le dispositif domotique D effectue la commande C.

Dans une étape ECD6, le code retour ou le résultat de la commande est communiqué dans un message de retour MCR par le dispositif D à l'unité centrale de commande U qui le reçoit dans une étape ECU6.

Dans une étape ECU7, le code retour ou le résultat de la commande est communiqué dans un message de retour MCRb par l'unité centrale de commande U au premier service Svc1 qui le reçoit dans une étape ECSvc17. Le format de ce message peut être distinct de celui du message MCR, une conversion de format pouvant être réalisée par le premier service Svc1.

Dans une étape ECSvc18, le service Svc1 opère une vérification afin de déterminer si le code de retour contenu dans le message MCrb peut être transmis au service Svc2, en particulier si le code de retour de la commande ou la fonction concernée est autorisée pour ce dispositif pour le service Svc2. Cette vérification est réalisée auprès du référentiel Rf.

Dans une étape ECSvc19, dans le cas ou le code retour ou résultat peut être communiqué au deuxième service, le code retour ou le résultat de la commande est communiqué dans un message de retour MCRa par le premier service Svc1 au deuxième service Svc2 qui le reçoit dans une étape ECSvc29. Le format de ce message peut être distinct de celui du message MCRb, une conversion de format pouvant être réalisée par le premier service Svc1.

### Procédé de supervision

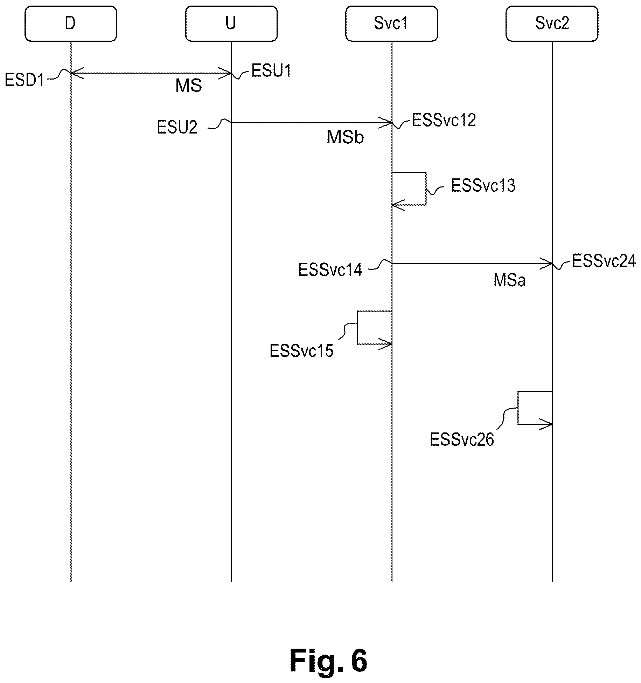

Nous allons à présent décrire un procédé de supervision d'au moins un dispositif domotique D appartenant à une installation domotique Su en référence à la figure 6. Nous supposons ici que les étapes d'un procédé de configuration ont été réalisées conformément par exemple à ce qui a été exposé précédemment en référence à la figure 4.

Dans une étape ESD1, le dispositif domotique D émet un message de supervision MS correspondant à un évènement de changement de valeur d'une variable d'état S à destination d'unité centrale de commande U à laquelle est rattachée le dispositif D considéré, l'unité centrale de commande recevant ce message dans une étape ESU1.

Dans une étape ESU2, l'unité centrale de commande U émet un message de supervision MSb, qui reprend des informations concernant l'évènement de changement de valeur de la variable d'état S ou les traduit dans un format différent, de façon à les transmettre au premier service Svc1, qui reçoit le message MSb dans une étape ESScv12.

Selon une variante, dans le cas ou l'unité centrale de commande U est intégrée dans le dispositif D, la constitution du message de supervision MSb peut être réalisée localement lors de la détection de l'évènement déclencheur correspondant au changement de valeur d'une variable d'état.

Selon une autre variante, dans le cas ou l'unité centrale de commande U est distincte du dispositif D, il est également possible que le dispositif envoie de façon périodique des messages MS et que ce soit l'unité centrale de commande U qui opère une vérification pour repérer les changements de valeur. Enfin il est également possible que des messages de supervision MSb soient envoyés sans constatation de changement de valeur.

Dans une étape ESSvc13, le premier service Svc1 détermine s'il convient d'envoyer un message de supervision MSa au deuxième service. En particulier, le service Svc1 opère un contrôle afin de vérifier l'identification du deuxième service Svc2 sur la base par exemple d'une vérification de la validité du jeton d'identification Tk. Le premier service Svc1 vérifie ensuite s'il existe une autorisation de supervision concernant le dispositif D, c'est-à-dire si elle concerne un dispositif D pour lequel une autorisation a été donnée lors de la configuration et/ou si la communication d'information de supervision concernant la variable d'état S concernée est autorisée pour ce dispositif pour le service Svc2. En particulier, cette vérification est réalisée auprès du référentiel Rf.

Ainsi un filtrage sur un type de variable d'état S peut être réalisé, voire un filtrage sur des plages de valeur de la variable d'état S.

Dans une étape ESSvc14, et dans la mesure où le premier service Svc1 a déterminé qu'un tel message MSa devait être envoyé, le premier service Svc1 émet un message de supervision MSa à destination du deuxième service Svc2, qui reçoit le message dans une étape ESSvcs24.

Sur la figure 6, les étapes ESSvc14 et ESSvc24 figurent une notification entre le premier service Svc1 et le deuxième service Svc2 qui correspond à un envoi direct. Il est toutefois possible que d'autres mécanismes soient utilisés.

En particulier, selon une première variante, un mécanisme de file d'attente peut être mis en oeuvre, les messages pouvant être stockés par le premier service sur la file d'attente, et collecté par le deuxième service de façon asynchrone.

D'autres systèmes de type push/pull peuvent également être utilisés.

Dans une étape ESSvc15, un stockage local des informations relatives aux variables d'état peut être réalisé par le premier service Svc1. Il est possible qu'un filtrage des informations soit réalisé à ce stade. Cette configuration est notamment utile dans le cas ou le dispositif D est la propriété ou sous le contrôle d'une deuxième entité en charge du deuxième service Svc2, le premier service Svc1 et éventuellement l'unité centrale de commande, étant sous le contrôle d'une première entité et agissant comme un service d'infrastructure intermédiaire. Ainsi le premier service Svc1 peut jouer le rôle d'un canal de communication entre les dispositifs domotiques D d'une installation domotique Su et un deuxième service Svc2 sans pour autant être autorisé à consulter ou conserver les données dont il assure le transit. Il est à noter qu'il est également possible qu'aucun stockage ne soit réalisé.

Dans une étape ESSvC26, un stockage local des informations relatives aux variables d'état S peut être réalisé par le deuxième service Svc2.

## Revendications

1. Procédé de configuration d'accès à distance à au moins un dispositif domotique (D) appartenant à une installation domotique (Su), l'installation domotique (Su) comprenant l'au moins un dispositif domotique (D) et au moins une unité centrale de commande (U), le procédé étant mis en oeuvre par un premier service d'accès à distance (Svc1) exécuté par une unité de gestion (Sv) et comprenant les étapes suivantes :
- Réception (ECfSvc12) d'un message d'information (Mln) concernant une présence du dispositif domotique (D) en provenance d'une unité centrale de commande (U) à laquelle est rattaché le dispositif (D) ;
- Détermination (ECfSvc13) d'un deuxième service d'accès à distance (Svc2) associé à un type du dispositif domotique (D) pour lequel un accès à distance doit être configuré avec des règles d'accès correspondantes ;
- Configuration (ECfSvc14) d'un référentiel de droit d'accès (Rf) afin d'accepter au moins un ordre de commande (MCa) en provenance du deuxième service (Svc2) ou l'envoi de données de supervision (MSa) vers le deuxième service (Svc2) pour le compte du dispositif domotique (D) ; et
- Envoi (ECfSvc15) d'un message d'acceptation/d'inscription à destination du deuxième service d'accès à distance (Svc2).

2. Procédé de configuration d'accès à distance à au moins un dispositif domotique (D) appartenant à une installation domotique (Su) selon la revendication 1, dans lequel l'étape de détermination (ECfSvc13) d'un deuxième service d'accès à distance (Svc2) associé à un type du dispositif domotique (D) pour lequel un accès à distance doit être configuré comprend une consultation d'un référentiel (Rf0) de définition de règles d'accès.

3. Procédé de configuration d'accès à distance à au moins un dispositif domotique (D) appartenant à une installation domotique (Su) selon l'une des revendications 1 ou 2, dans lequel l'étape de configuration (ECfSvc14) comprend une étape de génération d'un jeton d'identification (Tk) pour le deuxième service d'accès à distance (Svc2).

4. Procédé de configuration d'accès à distance à au moins un dispositif domotique (D) appartenant à une installation domotique (Su) selon l'une des revendications 1 à 3, comprenant l'étape suivante, préalable à l'étape (ECfSvc14) de configuration :
- Demande (ECfSvc13') d'une autorisation d'accès au profit du deuxième service d'accès à distance (Svc2) à un utilisateur (Usr1).

5. Procédé de configuration d'accès à distance à au moins un dispositif domotique (D) appartenant à une installation domotique (Su) selon l'une des revendications précédentes, comprenant l'étape suivante :
- Envoi (ECfSvc18) d'au moins un message de description (MDesc), ou de transmission d'une vue filtrée de l'installation (Su) ou d'un groupe de dispositifs domotiques (D) comprenant au moins un dispositif (D), à destination du deuxième service d'accès à distance (Svc2).

6. Procédé de configuration d'accès à distance à au moins un dispositif domotique (D) appartenant à une installation domotique (Su), l'installation domotique étant accessible par un premier service d'accès à distance (Svc1), le procédé étant mis en oeuvre par un deuxième service d'accès à distance (Svc2) déterminé lors de l'étape de détermination (ECfSvc13) mise en oeuvre selon l'une des revendications 1 à 5 et comprenant les étapes suivantes :
- Réception (ECfSvc25) par le deuxième service d'accès à distance (Svc2) du message d'acceptation/d'inscription envoyé par le premier service d'accès à distance (Svc1) lors de l'étape d'envoi (ECfSvc15) d'un message d'acceptation/d'inscription mise en oeuvre selon l'une des revendications 1 à 5;
- Configuration (ECfSvc26) d'un profil ou compte pour un utilisateur (Usr1) sous le contrôle duquel est placé le dispositif domotique (D) sur le deuxième service d'accès à distance (Svc2) et enregistrement d'une correspondance entre un identifiant (Usr1ID1) de l'utilisateur (Usr1) sur le premier service d'accès à distance (Svc1), et l'identifiant (Usr1ID2) de l'utilisateur (Usr1) sur le deuxième service d'accès à distance (Svc2).

7. Procédé de commande à distance d'au moins un dispositif domotique (D) appartenant à une installation domotique (Su), l'installation domotique comprenant l'au moins un dispositif domotique (D) et au moins une unité centrale de commande (U), le procédé étant mis en oeuvre par un premier service d'accès à distance (Svc1) exécuté par une unité de gestion (Sv) et comprenant les étapes suivantes :
- réception (ECSvc11) d'un message de commande (MCa) concernant au moins une commande (C) à réaliser sur l'au moins un dispositif domotique (D) en provenance d'un deuxième service d'accès à distance (Svc2) déterminé lors de l'étape de détermination (ECfSvc13) mise en oeuvre selon l'une des revendications 1 à 5 ;
- vérification (ECSvc12) de l'autorisation de la commande (C) demandée dans le message (MCa) pour le deuxième service d'accès à distance (Svc2) auprès d'un référentiel de droits d'accès (Rf) configuré lors de l'étape de configuration mise en oeuvre selon l'une des revendications 1 à 5;
- dans le cas où la commande (C) est autorisée pour le deuxième service d'accès à distance (Svc2), envoi (ECSvc13) d'au moins un message de commande (MCb) à destination d'au moins une unité centrale de commande (U) à laquelle est rattachée l'au moins un dispositif domotique (D) concerné par la commande (C).

8. Procédé de commande à distance d'au moins un dispositif domotique (D) appartenant à une installation domotique (Su) selon la revendication 7, dans lequel :
- Le message de commande (MCa) concernant au moins une commande (C) à réaliser sur l'au moins un dispositif domotique (D) en provenance d'un deuxième service d'accès à distance (Svc2) comprend un jeton d'identification (Tk) ;
Le procédé comprenant en outre
- Une étape de vérification (ECSvc12) de la validité du jeton d'identification (Tk) pour le deuxième service d'accès à distance (Svc2) auprès du référentiel de droits d'accès (Rf).

9. Procédé de commande à distance d'au moins un dispositif domotique (D) appartenant à une installation domotique (Su) selon l'une quelconque des revendications 7 ou 8, comprenant en outre les étapes suivantes :
- Réception (ECSvc17) d'un message de retour (MCRb) en provenance de l'unité centrale de commande (U) à laquelle est rattaché le dispositif (D).
- vérification (ECSvc18) de l'autorisation de l'envoi d'un message de retour (MCRa) pour la commande (C) au deuxième service d'accès à distance (Svc2) auprès du référentiel de droits d'accès (Rf) ;
- dans le cas où la communication du code de retour de commande (C) est autorisée pour le deuxième service d'accès à distance (Svc2), envoi (ECSvc19) d'un message de retour (MRa) à destination du deuxième service d'accès à distance (Svc2).

10. Procédé de supervision à distance d'au moins un dispositif domotique (D) appartenant à une installation domotique (Su), l'installation domotique comprenant l'au moins un dispositif domotique (D) et au moins une unité centrale de commande (U), le procédé étant mis en oeuvre par un premier service d'accès à distance (Svc1) exécuté par une unité de gestion (Sv) et comprenant les étapes suivantes :
- Réception (ESSvc12) d'un message de supervision (MSb) en provenance d'une unité centrale de commande (U) comprenant des informations concernant au moins une variable d'état (S) de l'au moins un dispositif domotique (D) rattaché à l'unité centrale de commande (U).
- Vérification (ESSvc13) de l'autorisation de l'envoi d'un message de supervision (MSa) concernant la variable d'état (S) du dispositif domotique (D) à un deuxième service d'accès à distance (Svc2) déterminé lors de l'étape de détermination (ECfSvc13) mise en oeuvre selon l'une des revendications 1 à 5 auprès d'un référentiel de droits d'accès (Rf) configuré lors de l'étape de configuration mise en oeuvre selon l'une des revendications 1 à 5 ;
- Dans le cas où l'envoi du message de supervision est autorisé, Envoi (ESSvc14) du message de supervision (MSa) à destination du deuxième service d'accès à distance (Svc2).

11. Procédé de supervision à distance d'au moins un dispositif domotique (D) appartenant à une installation domotique (Su) selon la revendication 10, comprenant en outre l'étape suivante :
- stockage (ESSvc15) des informations relatives aux variables d'état (S) par le premier service d'accès à distance (Svc1).

## Patentansprüche

1. Verfahren zur Konfiguration eines Fernzugriffs auf mindestens eine Heimautomationsvorrichtung (D), die einer Heimautomationsanlage (Su) angehört, wobei die Heimautomationsanlage (Su) mindestens eine Heimautomationsvorrichtung (D) und mindestens eine zentrale Steuerungseinheit (U) umfasst, wobei das Verfahren durch mindestens einen Fernzugriffsdienst (Svc1) umgesetzt wird, der durch eine Verwaltungseinheit (Sv) ausgeführt wird, und die folgenden Schritte umfasst:
- Empfangen (ECfSvc12) einer Informationsnachricht (Mln) in Bezug auf eine Präsenz der Heimautomationsvorrichtung (D) von einer zentralen Steuerungseinheit (U), mit der die Vorrichtung (D) verknüpft ist;
- Bestimmen (ECfSvc13) eines zweiten Fernzugriffsdienstes (Svc2), der einem Typen der Heimautomationsvorrichtung (D) zugeordnet ist, für die ein Fernzugriff mit den entsprechenden Zugriffsregeln zu konfigurieren ist;
- Konfiguration (ECfSvc14) eines Zugriffsrechtsstandards (Rf), um mindestens einen Steuerungsbefehl (MCa) aus dem zweiten Dienst (Svc2), oder die Sendung von Überwachungsdaten (MSa) zum zweiten Dienst (Svc2) im Auftrag der Heimautomationsvorrichtung (D) zu akzeptieren; und
- Senden (ECfSvc15) einer Akzeptierungs-/Anmeldenachricht an den zweiten Fernzugriffsdienst (Svc2).

2. Verfahren zur Konfiguration eines Fernzugriffs auf mindestens eine Heimautomationsvorrichtung (D), die einer Heimautomationsanlage (Su) angehört, nach Anspruch 1, wobei der Schritt des Bestimmens (ECfSvc13) eines zweiten Fernzugriffsdienstes (Svc2), der einem Typen der Heimautomationsvorrichtung (D) zugeordnet ist, für die ein Fernzugriff zu konfigurieren ist, eine Konsultation eines Standards (Rf0) zur Definition von Zugriffsregeln umfasst.

3. Verfahren zur Konfiguration eines Fernzugriffs auf mindestens eine Heimautomationsvorrichtung (D), die einer Heimautomationsanlage (Su) angehört, nach einem der Ansprüche 1 oder 2, wobei der Schritt der Konfiguration (ECfSvc14) einen Schritt des Generierens eines Identifizierungsjetons (Tk) für den zweiten Fernzugriffsdienst (Svc2) umfasst.

4. Verfahren zur Konfiguration eines Fernzugriffs auf mindestens eine Heimautomationsvorrichtung (D), die einer Heimautomationsanlage (Su) angehört, nach einem der Ansprüche 1 bis 3, umfassend den folgenden Schritt vor dem Schritt (ECfSvc14) der Konfiguration:
- Beantragen (ECfSvc13') einer Zugriffsgenehmigung zu Gunsten des zweiten Fernzugriffsdienstes (Svc2) an einen Nutzer (Usr1).

5. Verfahren zur Konfiguration eines Fernzugriffs auf mindestens eine Heimautomationsvorrichtung (D), die einer Heimautomationsanlage (Su) angehört, nach einem der vorstehenden Ansprüche, den folgenden Schritt umfassend:
- Senden (ECfSvc18) mindestens einer Nachricht zum Beschreiben (MDesc), oder zum Übertragen einer gefilterten Ansicht der Anlage (Su) oder einer Gruppe von Heimautomationsvorrichtungen (D), die mindestens eine Vorrichtung (D) umfasst, an den zweiten Fernzugriffsdienst (Svc2).

6. Verfahren zur Konfiguration eines Fernzugriffs auf mindestens eine Heimautomationsvorrichtung (D), die einer Heimautomationsanlage (Su) angehört, wobei auf die Heimautomationsanlage durch einen ersten Fernzugriffsdienst (Svc1) zugegriffen werden kann, wobei das Verfahren von einem zweiten Fernzugriffsdienst (Svc2) umgesetzt wird, der beim Schritt zum Bestimmen (ECfSvc13) bestimmt wird, der nach einem der Ansprüche 1 bis 5 umgesetzt wird, und die folgenden Schritte umfasst:
- Empfangen (ECfSvc25) durch den zweiten Fernzugriffsdienst (Svc2) der Akzeptierungs-/Anmeldenachricht, die von dem ersten Fernzugriffsdienst (Svc1) beim Schritt zum Senden (ECfSvc15) einer Akzeptierungs-/Anmeldenachricht gesendet wird, der nach einem der Ansprüche 1 bis 5 umgesetzt wird;
- Konfiguration (ECfSvc26) eines Profils oder Kontos für einen Nutzer (Usr1), unter dessen Kontrolle die Heimautomationsvorrichtung (D) gestellt ist, auf dem zweiten Fernzugriffsdienst (Svc2) und Speichern einer Entsprechung zwischen einer Kennung (Usr1ID1) des Nutzers (Usr1) auf dem ersten Fernzugriffsdienst (Svc1), und der Kennung (Usr1ID2) des Nutzers (Usr1) auf dem zweiten Fernzugriffsdienst (Svc2).

7. Verfahren zur Fernsteuerung mindestens einer Heimautomationsvorrichtung (D), die einer Heimautomationsanlage (Su) angehört, wobei die Heimautomationsanlage mindestens eine Heimautomationsvorrichtung (D) und mindestens eine zentrale Steuerungseinheit (U) umfasst, wobei das Verfahren durch einen ersten Fernzugriffsdienst (Svc1) umgesetzt wird, der durch eine Verwaltungseinheit (Sv) ausgeführt wird, und die folgenden Schritte umfasst:
- Empfangen (ECSvc11) einer Steuerungsnachricht (MCa) in Bezug auf mindestens eine Steuerung (C), die an mindestens einer Heimautomationsvorrichtung (D) vorzunehmen ist, von einem zweiten Fernzugriffsdienst (Svc2), der beim Schritt zum Bestimmen (ECfSvc13) bestimmt wird, der nach einem der Ansprüche 1 bis 5 umgesetzt wird;
- Überprüfen (ECSvc12) der Genehmigung der Steuerung (C), die in der Nachricht (MCa) für den zweiten Fernzugriffsdienst (Svc2) bei einem Zugriffsrechtsstandard (Rf) beantragt wird, der beim Konfigurationsschritt konfiguriert wird, der nach einem der Ansprüche 1 bis 5 umgesetzt wird;
- für den Fall, dass die Steuerung (C) für den zweiten Fernzugriffsdienst (Svc2) genehmigt wird, Senden (ECSvc13) mindestens einer Steuerungsnachricht (MCb) an mindestens eine zentrale Steuerungseinheit (U), mit der die mindestens eine von der Steuerung (C) betroffene Heimautomationsvorrichtung (D) verknüpft ist.

8. Verfahren zur Fernsteuerung zu mindestens einer Heimautomationsvorrichtung (D), die einer Heimautomationsanlage (Su) angehört, nach Anspruch 7, wobei:
- Die Steuerungsnachricht (MCa) in Bezug auf mindestens eine Steuerung (C), die an mindestens einer Heimautomationsvorrichtung (D) vorzunehmen ist, von einem zweiten Fernzugriffsdienst (Svc2) einen Identifizierungsjeton (Tk) umfasst;
Das Verfahren weiter umfasst
- Einen Schritt zum Überprüfen (ECSvc12) der Gültigkeit des Identifizierungsjetons (Tk) für den zweiten Fernzugriffsdienst (Svc2) beim Zugriffsrechtsstandard (Rf).

9. Verfahren zur Fernsteuerung zu mindestens einer Heimautomationsvorrichtung (D), die einer Heimautomationsanlage (Su) angehört, nach einem der Ansprüche 7 oder 8, weiter die folgenden Schritte umfassend:
- Empfangen (ECSvc17) einer Rückmeldenachricht (MCRb) von der zentralen Steuerungseinheit (U), mit der die Vorrichtung (D) verknüpft ist.
- Überprüfen (ECSvc18) der Genehmigung zum Senden einer Rückmeldenachricht (MCRa) für die Steuerung (C) an den zweiten Fernzugriffsdienst (Svc2) beim Zugriffsrechtsstandard (Rf);
- für den Fall, dass die Kommunikation des Rückgabecodes der Steuerung (C) für den zweiten Fernzugriffsdienst (Svc2) genehmigt ist, Senden (ECSvc19) einer Rückmeldenachricht (MRa) an den zweiten Fernzugriffsdienst (Svc2).

10. Verfahren zur Fernüberwachung mindestens einer Heimautomationsvorrichtung (D), die einer Heimautomationsanlage (Su) angehört, wobei die Heimautomationsanlage mindestens eine Heimautomationsvorrichtung (D) und mindestens eine zentrale Steuerungseinheit (U) umfasst, wobei das Verfahren durch einen Fernzugriffsdienst (Svc1) umgesetzt wird, der durch eine Verwaltungseinheit (Sv) ausgeführt wird, und die folgenden Schritte umfasst:
- Empfangen (ESSvc12) einer Überwachungsnachricht (MSb) von einer zentralen Steuerungseinheit (U), umfassend Informationen in Bezug auf mindestens eine Zustandsvariable (S) der mindestens einen Heimautomationsvorrichtung (D), die mit der zentralen Steuerungseinheit (U) verknüpft ist.
- Überprüfen (ESSvc13) der Genehmigung der Sendung einer Überwachungsnachricht (MSa) in Bezug auf die Zustandsvariable (S) der Heimautomationsvorrichtung (D) an einen zweiten Fernzugriffsdienst (Svc2), der beim Schritt zum Bestimmen (ECfSvc13) bestimmt wird, der nach einem der Ansprüche 1 bis 5 umgesetzt wird, bei einem Zugriffsrechtsstandard (Rf), der beim Schritt zum Konfigurieren konfiguriert wird, der nach einem der Ansprüche 1 bis 5 umgesetzt wird;
- Für den Fall, dass das Senden der Überwachungsnachricht genehmigt ist, Senden (ESSvc14) der Überwachungsnachricht (MSa) an den zweiten Fernzugriffsdienst (Svc2).

11. Verfahren zur Fernüberwachung mindestens einer Heimautomationsvorrichtung (D), die einer Heimautomationsanlage (Su) angehört, nach Anspruch 10, weiter den folgenden Schritt umfassend:
- Speichern (ESSvc15) der Informationen in Bezug auf die Zustandsvariablen (S) durch den ersten Fernzugriffsdienst (Svc1).

## Claims

1. A method for configuring a remote access to at least one home automation device (D) belonging to a home automation installation (Su), the home automation installation comprising the at least one home automation device (D) and at least one central control unit (U), the method being implemented by a first remote access service (Svc1) executed by a management unit (Sv) and comprising the following steps of:
- Receiving (ECfSvc12) an information message (MIn) concerning a presence of the home automation device (D) originating from a central control unit (U) to which the device (D) is attached;
- Determining (ECfSvc13) a second remote access service (Svc2) associated with a type of the home automation device (D) for which a remote access must be configured with corresponding access rules;
- Configuring (ECfSvc14) an access right repository (Rf) in order to accept at least one control command (MCa) originating from the second service (Svc2) or sending supervision data (MSa) to the second service (Svc2) on behalf of the home automation device (D); and
- Sending (ECfSvc15) an acceptance/registration message to the second remote access service (Svc2).

2. The method for configuring a remote access to at least one home automation device (D) belonging to a home automation installation (Su) according to claim 1, wherein the step of determining (ECfSvc13) a second remote access service (Svc2) associated with a type of the home automation device (D) for which a remote access must be configured comprises a consultation of an access rules definition repository (Rf0).

3. The method for configuring a remote access to at least one home automation device (D) belonging to a home automation installation (Su) according to any of claims 1 or 2, wherein the configuration step (ECfSvc14) comprises a step of generating an identification token (Tk) for the second remote access service (Svc2).

4. The method for configuring a remote access to at least one home automation device (D) belonging to a home automation installation (Su) according to any of claims 1 to 3, comprising the following step, prior to the configuration step (ECfSvc14), of:
- Requesting (ECfSvc13') an access authorization for the benefit of the second remote access service (Svc2) to a user (Usr1).

5. The method for configuring a remote access to at least one home automation device (D) belonging to a home automation installation (Su) according to any of the preceding claims, comprising the following step of:
- Sending (ECfSvc18) at least one of: a description message (MDesc) or a transmission message of a filtered view of the installation (Su) or a group of home automation devices (D) comprising at least one device (D), to the second remote access service (Svc2).

6. A method for configuring a remote access to at least one home automation device (D) belonging to a home automation installation (Su), the home automation installation being accessible by a first remote access service (Svc1), the method being implemented by a second remote access service (Svc2) determined during the determination step (ECfSvc13) implemented according to any of claims 1 to 5 and comprising the following steps of:
- Receiving (ECfSvc25) by the second remote access service (Svc2) the acceptance/registration message sent by the first remote access service (Svc1) during the step of sending (ECfSvc15) an acceptance/registration message implemented according to any of claims 1 to 5;
- Configuring (ECfSvc26) a profile or account for a user (Usr1) under whose monitoring the home automation device (D) is placed on the second remote access service and recording a correspondence between an identifier (Usr1 ID1) of the user (Usr1) on the first remote access service (Svc1), and the identifier (Usr1ID2) of the user (Usr1) on the second remote access service (Svc2).

7. A method for remotely controlling at least one home automation device (D) belonging to a home automation installation (Su), the home automation installation comprising the at least one home automation device (D) and at least one central control unit (U), the method being implemented by a first remote access service (Svc1) executed by a management unit (Sv) and comprising the following steps of:
- receiving (ECSvc1 1) a control message (MCa) concerning at least one control (C) to be carried out on the at least one home automation device (D) originating from a second remote access service (Svc2) determined during the determination step (ECfSvc13) implemented according to any of claims 1 to 5;
- verifying (ECSvc12) the authorization of the control (C) requested in the message (MCa) for the second remote access service (Svc2) from an access rights repository (Rf) configured during the configuration step implemented according to any of claims 1 to 5;
- in the case where the control (C) is authorized for the second remote access service (Svc2), sending (ECSvc13) at least one control message (MCb) to at least one central control unit (U) to which the at least one home automation device (D) concerned by the control (C) is attached.

8. The method for remotely controlling at least one home automation device (D) belonging to a home automation installation (Su) according to claim 7, wherein:
- The control message (MCa) concerning at least one control (C) to be carried out on the at least one home automation device (D) originating from a second remote access service (Svc2) comprises an identification token (Tk);
The method further comprising
- A step of verifying (ECSvc12) the validity of the identification token (Tk) for the second remote access service (Svc2) from the access rights repository (Rf).

9. The method for remotely controlling at least one home automation device (D) belonging to a home automation installation (Su) according to any one of claims 7 or 8, further comprising the following steps of:
- Receiving (ECSvc17) a return message (MCRb) originating from the central control unit (U) to which the device (D) is attached.
- verifying (ECSvc18) the authorization to send a return message (MCRa) for the control (C) to the second remote access service (Svc2) from the access rights repository (Rf);
- in the case where the communication of the control return code (C) is authorized for the second remote access service (Svc2), sending (ECSvc19) a return message (MRa) to the second remote access service (Svc2).

10. A method for remotely supervising at least one home automation device (D) belonging to a home automation installation (Su), the home automation installation comprising the at least one home automation device (D) and at least one central control unit (U), the method being implemented by a first remote access service (Svc1) executed by a management unit (Sv) and comprising the following steps of:
- Receiving (ESSvc12) a supervision message (MSb) originating from a central control unit (U) comprising information concerning at least one state variable (S) of the at least one home automation device (D) attached to the central control unit (U).
- Verifying (ESSvc13) the authorization to send a supervision message (MSa) concerning the state variable (S) of the home automation device (D) to a second remote access service (Svc2) determined during the determination step (ECfSvc13) implemented according to any of claims 1 to 5 from an access rights repository (Rf) configured during the configuration step implemented according to any of claims 1 to 5;
- In the case where the sending of the supervision message is authorized, Sending (ESSvc14) the supervision message (MSa) to the second remote access service (Svc2).

11. The method for remotely supervising at least one home automation device (D) belonging to a home automation installation (Su) according to claim 10, further comprising the following step of:
- storing (ESSvc15) information relating to the state variables (S) by the first remote access service (Svc1).
